(19) Europäisches Patentamt
European Patent Office
Office européen des brevets

(11) Numéro de publication: **0 263 038 B1**

(12) **FASCICULE DE BREVET EUROPEEN**

(45) Date de publication du fascicule du brevet: **19.09.90**

(51) Int. Cl.⁵: **C08G 77/38,** C08L 27/06 // (C08L27/06, 83:06)

(21) Numéro de dépôt: **87420216.1**

(22) Date de dépôt: **10.08.87**

(54) **Diorganopolysiloxane à fonction bétacétoester utile comme stabilisant des polymères à base de polychlorure de vinyle.**

(30) Priorité: **12.08.86 FR 8611785**

(43) Date de publication de la demande: **06.04.88 Bulletin 88/14**

(45) Mention de la délivrance du brevet: **19.09.90 Bulletin 90/38**

(84) Etats contractants désignés: **AT BE CH DE ES FR GB GR IT LI LU NL SE**

(56) Documents cités:
**DE-A-1 545 040**
**DE-A-1 795 563**
**DE-B-1 193 504**

**CHEMICAL ABSTRACTS, vol. 100, no. 20, 14 mai 1984, page 47, résumé no. 157643t, Columbus, Ohio, US; & JP-A-58 213 040 (SAKAI CHEMICAL INDUSTRY CO. LTD) 10-12-1983**

(73) Titulaire: **RHONE-POULENC CHIMIE, 25, quai Paul Doumer, F-92408 Courbevoie Cédex(FR)**

(72) Inventeur: **Gay, Michel, 11, rue Garibaldi, F-69006 Lyon(FR)**

(74) Mandataire: **Vogt, Bernard et al, RHONE-POULENC INTERSERVICES Service Brevets Chimie Centre de Recherches de Saint-Fons B.P. 62, F-69192 Saint-Fons Cédex(FR)**

**EP 0 263 038 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un diorganopolysiloxane à fonction beta-cetoester, son procédé de préparation et ses applications notamment comme stabilisant des polymères à base de polychlorure de vinyle (PVC) et comme d'adhérence des élastomères organopolysiloxanes.

De nombreux diorganopolysiloxanes porteurs de divers groupements fonctionnels organiques ont déjà été décrits dans la littérature comme par exemple ceux cités aux pages 261 à 268 de l'ouvrage de NOLL, Chemistry and Technology of silicones, édition en langue anglaise de 1968.

Dans les brevets allemands DE-A-1 193 504 et DE-A-1 795 563 on décrit des diorganopolysiloxanes porteurs de fonction béta-dicétone situées en bout de chaîne ou dans la chaîne polysiloxane. Ces polymères, très difficiles à préparer et très coûteux, sont donc porteurs de groupes béta-dicétones distincts du groupe béta-cétoester (acétoacétate).

La présente invention a pour but de proposer des diorganopolysiloxanes à fonction béta-cétoester peu coûteux, aisés à préparer et présentant des applications nombreuses et intéressantes, notamment comme stabilisant du PVC.

Ce but est atteint par la présent invention qui concerne en effet, un diorganopolysiloxane de fomule :

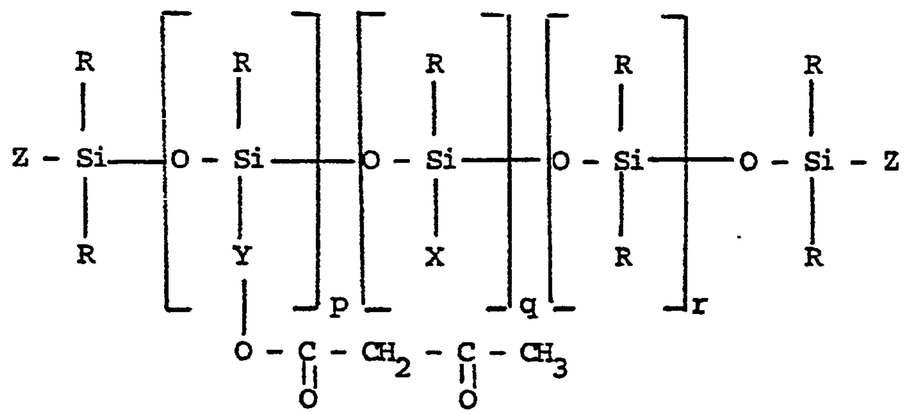

(1)

dans laquelle :

- les symboles R identiques ou différents sont choisis parmi les radicaux alkyle en $C_1$-$C_4$ inclusivement, trifluoro-3,3,3, propyle, vinyle et phényle, au moins 80 % en nombre des radicaux R étant des radicaux méthyle,
- les symboles Y, identiques ou différents, représentent un chaînon choisi parmi un chaînon alkylene linéaire ou ramifié en $C_1$-$C_{18}$ inclusivement, éventuellement prolongé par un chaînon polyéther choisi parmi le polyoxyde d'éthylène et le polyoxyde de propylène et leur mélange,
- les symboles X, identiques ou différents, représentent un radical choisi parmi Y-OH et Y-OCOR', Y ayant la signification ci-dessus et R' étant choisi parmi un radical alkyle ou alcényle linéaire ou ramifié en $C_1$-$C_{18}$ inclusivement,
- les symboles Z, identiques ou différents, sont choisis parmi un radical R ayant la signification ci-dessus, un radical

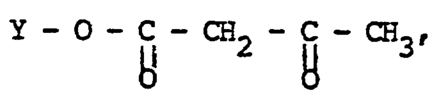

Y ayant la signification ci-dessus et OR', R' ayant la signification ci-dessus,

- p est un nombre entier compris entre 1 et 50 inclusivement, de préférence entre 1 et 16 inclusivement,
- q est un nombre entier compris entre 0 et 30 inclusivement, de préférence entre 0 et 8 inclusivement,
- r est un nombre entier compris entre 0 et 500 inclusivement, de préférence entre 2 et 50 inclusivement.

Bien entendu quand les copolymères de formule (1) se présentent sous forme de mélange présentant les mêmes motifs mais en nombre différent comme dans certains des exemples ci-dessous, ce mélange peut être représenté par une formule (1) moyenne dans laquelle p, q et r peuvent être des nombres décimaux.

Comme exemples de radicaux R alkyle on peut citer le radical méthyle, éthyle, propyle et butyle.

Comme exemples de motif diorganosiloxane $R_2$ SiO on peut citer :

$(CH_3)_2$ SiO

$(CH_2 = CH)(CH_3)$ SiO

$(C_6H_5)(CH_3)$ SiO
$(CF_3 - CH_2 - CH_2)(CH_3)$ SiO

Comme exemples de chaînon Y, on peut citer :
$-CH_2-$, $-(CH_2)_2-$, $-(CH_2)_3-(OCH_2-CH_2)_{29}-$, $-(CH_2)_3-$,
$-(CH_2)_3-[(O-CH_2-CH(CH_3)]_{15}-$, $-CH_2-CH(CH_3)-CH_2-$,
$-(CH_2)_{12}-$,

Le chaînon $-(CH_2)_3-$ est le chaînon préféré.

De préférence Z représente un radical R, de préférence méthyle.

Comme exemples de radical Y-OCOR′ on peut citer :
$CH_2 = CHCOOCH_2-$
$CH_2 = CHCOO(CH_2)_3-$
$C_8H_{15}COO(CH_2)_3-$
$CH_2 = C(CH_3)COO(CH_2)_3-$

De préférence R′COO forme le radical acrylate ou méthacrylate, c'est-à-dire que R′ est un radical alcènyl en $C_2$-$C_3$ inclusivement.

Les polymères de formule (1) peuvent être des copolymères statistiques, à bloc ou séquencés, selon la nature des copolymères de départ utilisés pour la synthèse des copolymères de formule (1).

La présente invention concerne également un procédé de préparation des produits de formule (1) selon lequel on fait réagir le dicétène sur une huile hydroxylée de formule :

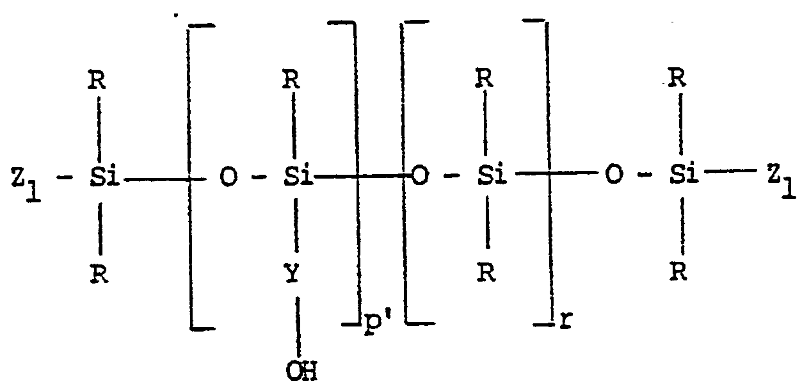

(2)

dans laquelle R, Y et r ont la signification ci-dessus, p′ = p + q et $Z_1$ est R ou Y-OH.

La réaction peut s'effectuer en masse ou, de préférence en milieu solvant organique tel que l'acétate d'éthyle, à pression atmosphérique, de préférence en présence d'un catalyseur acide tel que l'acide p-toluène sulfonique ou basique tel qu'une amine tertiaire, en particulier la triméthylamine, la triéthylamine, etc .....

La réaction d'un groupe hydroxyalkyle sur le dicétène est bien connue de l'homme de métier et est en particulier décrite par A.B. BOESE Industrial and Engineering Chemistry Int. Ed. 32 1940, pages 16 à 25 et par R.N. LACEY "Advances in organic Chemistry Methods and results", vol. 2, pages 240 à 248.

Dans le cas où l'on veut obtenir un polymère de formule (1) ou q = 0 et donc p′ = p on utilise une quantité stoechiométrique ou de préférence un excès de dicétène qui est éliminé en fin de réaction par exemple par distillation sous pression réduite.

Dans le cas où l'on veut obtenir un polymère de formule (1) ou q est différent de 0 on utilise une quantité adaptée inférieure à la quantité stoechimétrique de dicétène en fonction des nombres p et q préalablement choisis. Ensuite, éventuellement au cours d'une étape ultérieure dans le cas où l'on veut que X = Y-OCOR′ on estérifie les groupes hydroxyalkyle résiduels par des moyens connus tels qu'une estérification, une transestérification, etc ......

Une autre façon d'obtenir ces produits avec q différent de O est d'estérifier partiellement l'huile de formule (2) par un moyenn connu par exemple par transestérification par un ester de formule R″OCOR′, R″ étant un radical hydrocarboné saturé ou insaturé en présence, de préférence, d'un catalyseur tel que l'oxyde de dibutylétain ; ensuite on fait réagir le dicétène sur les groupes hydroxyalkyle résiduels non estérifiés.

Pour préparer les produits de départ de formule (2) dans le cas où ces produits sont nouveaux ou non disponibles dans le commerce, on peut par exemple faire réagir sur un hydrogénoorganopolysiloxane de formule :

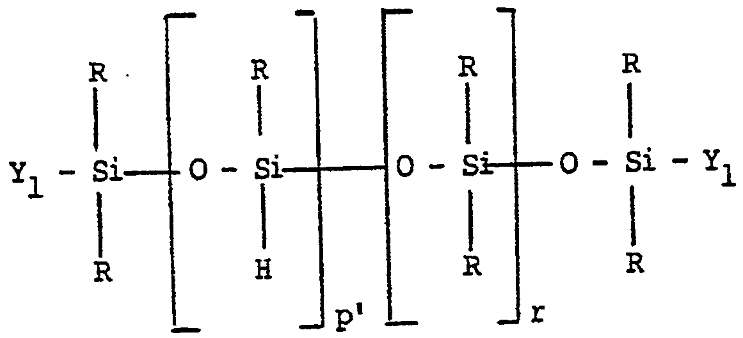 (3)

dans laquelle R, p' et r ont la signification ci-dessus et $Y_1$ est R ou un atome d'hydrogène sur un alcoool à insaturation alcénique de formule WOH dans laquelle W est un radical linéaire ou ramifié ayant de 2 à 18 atomes de carbone. Parmi ces alcools on utilise plus particulièrement l'alcool allylique et méthallylique en utilisant un catalyseur d'hydrosilylation au platine conformément à l'enseignement des brevets américains US-A-2 970 150 et US-A-4 160 775.

Les produits de formule (3) sont des produits bien connus dans l'industrie des silicones et sont généralement disponibles dans le commerce. Ils sont par exemple décrits dans les brevets américains US-A-3 220 972, US-A-3 436 366, US-A-3 697 473 et US-A-4 340 709.

Les produits de formule (1) sont en particulier utilisables comme additif dans les diverses compositions organopolysiloxanes durcissant en élastomère en vue de favoriser l'adhérence de ces élastomères sur des supports métalliques. Ils sont dans ce cas utilisables à la dose de 0,05 à 5 parties, de préférence de 0,1 à 2 parties pour 100 parties de compositions organopolysiloxanes.

Les compositions organopolysiloxanes utilisables sont en particulier les compositions bi-composantes (ou à deux emballages) réticulant par polycondensation décrites dans les brevets américains US-A-3 678 002, US-A-3 888 815, US-A-3 933 729 et GB-A-2 032 936 et celles réticulant par polyaddition décrites dans les brevets américains US-A-3 220 972, US-A-3 289 406, US-A-3 436 366 et US-A-3 697 473.

Des compositions monocomposantes acides (brevets américains US-A-3 035 016, US-A-3 409 573), neutres (brevet américain US-A-3 689 457, britannique GB-A-2 052 540 et européen EP-A-69 256), et basiques (brevets américains US-A-3 378 520, US-A-3 417 047 et 3 758 441) et les compositions réticulant à chaud en présence d'un péroxyde organique sont également utilisables (brevets américains US-A-3 821 140, 3 836 489, britannique GB-A-2 091 281 et GB-A-2 091 282).

Une autre application plus particulièrement avantageuse des produits de formule (1) est leur utilisation dans un procédé de stabilisation des polymères halogénés, et notamment des polymères à base de chlorure de vinyle, caractérisé par l'emploi conjoint :

a) - d'une quantité efficace d'au moins un dérivé organique du zinc,
b) - d'une quantité efficace d'au moins un dérivé organique d'un métal du groupe II $_a$ de la classification périodique des éléments ou d'au moins une hydrotalcite,
c) - d'une quantité efficace d'au moins un produit de formule (1).

Par dérivé organique du zinc de même que par dérivé organique d'un métal du groupe IIa, on entend :
- des sels dont l'anion provient principalement d'acides monocarboxyliques ou dicarboxyliques aliphatiques ayant de 2 à 24 atomes de carbone, saturés ou non, ou de monoesters, d'alkyle ayant 1 à 24 atomes de carbone ou d'alkényle ayant 3 à 24 atomes de carbone, des acides dicarboxyliques aliphatiques précédents, substitués ou non, ou d'acides monocarboxyliques aromatiques ou alicycliques substitués ou non ; parmi les anions les plus couramment utilisés, on peut citer ceux qui dérivent des acides maléique, acétique, propionique, hexanoïque, éthyl-2 hexanoïque, octanoïque, décanoïque, undécanoique, laurique, myristique, palmitique, stéarique, oléique, ricinoléique, béhénique, hydroxystéarique, hydroxyundécanoïque, benzoïque, phénylacétique, alkylbenzoïque, paratertiobutylbenzoïque, salicyclique ;
-des dérivés métalliques (phénolates) de composés phénoliques subsitituės ou non, tel que le phénol ou les phénols substitués par un radical alkyle ayant de préférence de 4 à 24 atomes de carbone ;
- des mercaptides par exemple le zinc(isooctyle 2-thioacétate) et
- des chélates de composés β-dicarbonylés.

Pour des raisons pratiques ou pour des raisons économiques, on choisit de préférence, parmi les dérivés métalliques cités précédemment, ceux qui dérivent des acides carboxyliques ou des composés phénoliques.

Les hydrotalcites également utilisées comme composé b) dans le procédé selon l'invention sont des composés ayant la formule générale :
$Mg_{(1-a)}Al_a(OH)_2A_{a/2'}\ pH_2O$ (4)
dans laquelle :

- a est un nombre de 0 à 0,5 ;
- A représente $SO_4^{--}$ ou $CO_3^{--}$ ;
- p représente le nombre de molécules d'eau par molécule d'hydrotalcite.

Ces hydrotalcites comprennent les hydrotalcites naturelles et les hydrotalcites obtenues par traitement des hydrotalcites naturelles.

Ce sont en particulier les hydrotalcites décrites dans le brevet FR-A-2 483 934.

Ainsi on utilise fréquemment comme composé a) les sels de zinc des acides propionique, octanoïque, laurique, stéarique, oléique, ricinoléique, benzoïque, paratertiobutylbenzoïque, salicylique ou du maléate de monoéthyl-2 hexyle et les nonylphénates de zinc; comme composé b) on utilise fréquemment les sels de calcium, da magnésium, de baryum ou de strontium des acides propionique, octanoïque, laurique, stéarique, oléique, ricinoléique, benzoïque, paratertiobutylbenzoïque, salicylique et du maléate de monoéthyl-2 hexyle et les nonylphénates de calcium, de magnésium, de baryum ou de strontium ; comme composé b) ou utilise également les hydrotalcites et plus préférentiellement les hydrotalcites commerciales obtenues par traitement des hydrotalcites naturelles.

Parmi les dérivés mentionnés en b), on préférera pour les applications alimentaires les dérivés du calcium et les dérivés du magnésium, et les hydrotalcites et encore plus particulièrement les dérivés du calcium et les hydrotalcites qui conduisent à de très bons résultats.

Les composés b) sont aussi couramment utilisés en mélanges tels que sels organiques de Ca et Ba, sels organiques de Ca et Mg, hydrotalcite et sel organique de Ca, hydrotalcite et sel organique de Ba ou hydrotalcite et sel organique de Mg.

Des taux de 0,005 à 5 % en poids de composés b) par rapport au polymère à stabiliser et de préférence de 0,02 à 2 % permettent, en addition avec les autres stabilisants revendiqués, l'obtention de bons résultats.

Des taux de 0,005 à 1 % en poids de composé a) par rapport au polymère à stabiliser et de préférence de 0,01 à 0,6 % conduisent à de très bons résultats.

Les produits de formule (1) sont utilisés dans des proportions relatives au polymère qui varient très largement selon leur masse moléculaire ; ces proportions sont généralement comprises entre 0,005 % en poids et 5 % en poids par rapport au polymère. De préférence on utilisera de 0,05 % en poids à 2 % en poids de produits de formule (1) par rapport au polymère.

D'une manière générale on peut indiquer que la proportion pondérale de chacun des constituants des compositions selon l'invention sera d'autant plus élevée dans les compositions polymériques à stabiliser que celles-ci seront plus rigides, c'est-à-dire contiendront moins de plastifiant.

Dans l'intervalle des différentes proportions données pour chacun des constituants a), b) et c) par rapport au polymère, il est bien entendu que l'homme de métier pourra être amené à adapter les rapports relatifs de ces différents constituants, afin d'obtenir telle ou telle formulation plus particulièrement destinée à fournir le résultat désiré, ou en fonction de l'origine ou du mode de préparation du polymère.

Ainsi par exemple les polymères préparés en suspension pourront en général contenir une proportion de zinc plus élevée que les polymères préparés en masse, mais ces proportions restent néanmoins préférentiellement comprises dans les valeurs indiquées précédemment. Conjointement aux dérivés organiques du zinc, aux dérivés organiques des métaux du groupe IIa de la classification périodique et/ou aux hydrotalcites et aux produits de formule (1), il peut être intéressant d'utiliser un polyol dans la mise en oeuvre du procédé selon l'invention, bien qu'un tel composé ne présente par de caractère d'indispensabilité. Sa présence est particulièrement intéressante pour stabiliser des polymères à base de chlorure de vinyle préparés en masse.

Les polyols conviennent généralement pour allonger l'effet stabilisant des composés métalliques ou organiques utilisés dans le procédé selon l'invention. Un compromis doit toutefois être trouvé car ces produits ont tendance à colorer les compositions. Pour des problèmes de mise en oeuvre à température élevée des polymères à base de chlorure de vinyle, il est préférable que les polyols utilisés dans le procédé de stabilisation selon l'invention aient un point d'ébullition supérieur à 150°C et le plus souvent supérieur à 170°C.

A titre d'exemples de tels polyols on peut citer des triols comme le triméthylolpropane, le glycérol, l'hexane triol-1,2,6, le butane triol-1,2,4 et le trishydroxyéthylisocyanurate, des tétrols comme le pentaérythritol, le diglycérol, des pentitols comme le xylitol, des hexitols comme le sorbitol, le mannitol et le dipentaérythritol, des polyols à huit groupes hydroxyle comme le tripentaérythritol et des polymères à groupes hydroxyle libres comme les alcools polyvinyliques, notamment ceux dans lesquels il reste moins de 30 % en moles de groupes esters par rapport à l'ensemble des groupes hydroxyle et esters et qui présentent une viscosité à 25°C en solution aqueuse à 4 % en poids comprise entre environ 4 mPa.s et 60 mPa.s.

En général on utilise de 0,005 % à 1 % en poids de polyol par rapport au polymère à stabiliser et de préférence de 0,01 % à 0,6 %.

Il a été trouvé que les polyols ayant plus de quatre groupes hydroxyle dans leur molécule donnent des résultats particulièrement satisfaisants.

Ainsi des polyols comme le sorbitol, le mannitol et le xylitol sont particulièrement efficaces dans le procédé selon l'invention et cela, même utilisés à de faibles doses. Ainsi, bien que ces composés soient employés à des doses situées de préférence entre 0,01 % et 0,25 % en poids, par rapport au polymère, un effet d'amélioration de la stabilisation des compositions polymériques les contenant est déjà net, et on

n'observe pas d'effet parasite de coloration, à des teneurs aussi faibles que 0,005 % à 0,01 % en poids par rapport au polymère.

A titre de moyen pour la mise en oeuvre du procédé selon l'invention, un autre objet de l'invention consiste dans le mélange d'au moins un dérivé organique du zinc, d'au moins un dérivé organique d'un métal du groupe IIa de la classification périodique des éléments ou d'au moins une hydrotalcite et d'au moins un produit de formule (1).

De tels mélanges peuvent être préparés en toutes proportions ; en général les proportions en poids des différents constituants sont telles que l'on ait :

- de 5 à 40 % de dérivé organique du zinc ;
- de 5 à 90 % de dérivé organique d'un métal du groupe IIa de la classification périodique des éléments ou d'hydrotalcite ;
- de 5 à 90 % de produits de formule (1).

Enfin l'invention consiste aussi dans les compositions à base de chlorure de polyvinyle stabilisées, obtenues par l'application du procédé selon l'invention.

Par composition à base de chlorure de polyvinyle, on entend des compositions contenant un homopolymère du chlorure de vinyle, un copolymère de chlorure de vinyle avec divers autres monomères ou un mélange de polymères ou copolymères dont une partie majoritaire est obtenue à partir de chlorure de vinyle.

En général tout type d'homopolymère de chlorure de vinyle peut convenir quel que soit son mode de préparation : polymérisation en masse, en suspension, en dispersion ou de tout autre type et quelle que soit sa viscosité intrinsèque.

Les homopolymères de chlorure de vinyle peuvent être modifiés chimiquement comme par exemple les polymères de chlorure de vinyle chlorés.

De nombreux copolymères de chlorure de vinyle peuvent également être stabilisés contre les effets de la chaleur : jaunissement et dégradation. Ils comprennent des copolymères obtenus par copolymérisation du chlorure de vinyle avec d'autres monomères présentant une liaison éthylénique polymérisable, comme par exemple les esters vinyliques : acétate de vinyle, chlorure de vinylidène ; les acides (ou leurs esters) maléique ou fumarique ; les oléfines : éthylène - propylène - hexène ; les esters acryliques ; le styrène ; ou les éthers vinyliques : n-vinyldodécyléther.

Ces copolymères contiennent habituellement au moins 50 % en poids de motifs chlorure de vinyle. Toutefois l'invention s'applique particulièrement bien aux copolymères contenant au moins 80 % en poids de motifs chlorure de vinyle.

L'invention s'applique bien aussi aux mélanges de polymères comprenant des quantités minoritaires d'autres polymères comme les polyoléfines halogénées ou les copolymères acrylonitrile - butadiène -styrène ou aux mélanges d'homopolymères ou de copolymères tels que définis plus haut.

Ces compositions peuvent être soit "rigides" soit "flexibles". Lorsqu'on utilise des compositions "rigides" elles peuvent comporter alors des modifications de résistance au choc, des pigments et/ou des charges, des lubrifiants, aidant à leur mise en oeuvre, en plus du polymère et des divers stabilisants ou adjuvants.

Lorsqu'on utilise des compositions "flexibles", elles peuvent comprendre des plastifiants primaires ou secondaires, des pigments et/ou des charges, des lubrifiants etc ... en plus du polymère et des divers stabilisants ou adjuvants. Ces stabilisants sont essentiellement des antioxydants, des stabilisants "lumière" ou anti-UV ainsi que d'autres composés connus pour leur effet sur la stabilisation thermique comme par exemple les époxydes, les phosphites, les composés phénoliques.

Ces époxydes sont généralement des composés complexes, habituellement des polyglycérides époxydés comme l'huile de soja époxydée, les huiles de lin ou de poisson époxydées, la talloil époxydée, ou des esters époxydés d'acides gras, ou des hydrocarbures époxydés comme le polybutadiène époxydé, ou des éthers époxydés.

Divers phosphites d'alkyle ou d'aryle sont aussi connus pour leur activité stabilisante comme par exemple le phosphite de phényle et d'éthyl-2 hexyle, le phosphite de triisodécyle ou le diphosphite de diisooctyle et de pentaérythryle.

Des composés phénoliques ont aussi été utilisés comme stabilisants thermiques : il s'agit principalement de l'hydroxytoluène butylé (BHT) et d'autres phénols substitués.

Il va de soi que l'on ne sort pas de l'invention en ajoutant aux stabilisants revendiqués de petites quantités de stabilisants additionnels maintenant bien connus de l'homme de l'art, comme par exemple des composés organiques β-dicétoniques ou des composés organiques azotés tels que les esters de l'acide β-aminocrotonique ou les dérivés de l'alpha-phénylindole ou les dérivés des dihydropyridines substituées ou d'autres composés soufrés tels que les diesters de l'acide thiomalique.

Les produits de formule (1) peuvent être introduits dans le polymère ou en totalité ou en partie, dans le monomère ou les comonomères à un stade quelconque de la polymérisation.

Les trois stabilisants utilisés dans le procédé selon l'invention peuvent être incorporés en même temps que les autres adjuvants. Ils peuvent aussi être mélangés entre eux ou avec certains des adjuvants. La composition stabilisante sera alors ultérieurement incoporée au polymère à l'état de poudre. Toutes les méthodes usuelles connues dans ce domaine peuvent convenir pour réaliser le mélange des ingrédients.

L'homogénéisation peut être par exemple effectuée à température ambiante dans un mélangeur lent ou être conduite en mélangeur rapide en chauffant le mélange à une température comprise entre la température ambiante et 120°C. Généralement dans cette dernière variante les adjuvants solides et le polymère en poudre sont introduits dans le mélangeur rapide à température ambiante, tandis que les adjuvants liquides sont rajoutés à une température de 40 à 60°C.

L'agitation est maintenue jusqu'à homogénéisation complète. Généralement des durées de 3 à 20 minutes sont suffisantes, mais ces durées ne sont données qu'à titre indicatif.

Les compositions stabilisées à base de chlorure de polyvinyle selon l'invention peuvent être mises en oeuvre selon toutes les techniques habituellement utilisées pour travailler les compositions de PVC et de ses copolymères par exemple : injection ; extrusion ; extrusion soufflage ; calandrage ; moulage par rotation.

Le procédé de stabilisation selon l'invention permet de retarder considérablement, sinon de supprimer, l'apparition du jaunissement pendant la période où la composition à base de chlorure de polyvinyle mise en oeuvre est chauffée à 180 °C et plus, et d'obtenir des produits finis transparents, incolores, homogènes et ne présentant pas d'exsudation.

Les béta-cetoesters organiques sont certes déjà connus par le brevet français FR-A-1 435 882 pour leur action stabilisante des résines de polychlorure de vinyle.

Cependant les produits de formule (1) de l'invention outre leur action stabilisante particulièrement efficace confèrent aux polymères à base de chlorure de vinyle, des propriétés de surface telles que lubrification externe, action "processing-aid", antiadhérence, démoulage, hydrofugation, aspect de surface, non adhérence des poussières, résistance à l'abrasion, "antifogging" et hémocompatibilité et sont remarquablement compatibles avec le PVC.

Les exemples suivants illustrent l'invention sans en limiter la portée. Dans les formules des exemples Me est le radical $CH_3$.

- Exemple 1 :

Dans un ballon tricol de 500 ml muni d'une agitation centrale, d'un réfrigérant ascendant et d'une gaine thermométrique on charge 100 g d'une huile hydroxypropylée de formule moyenne :

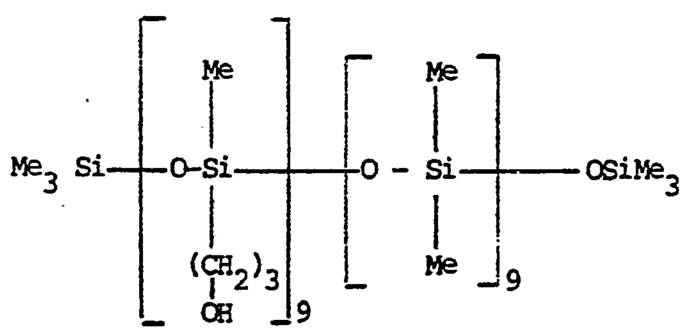

titrant 468 meq/100 g en fonction alcool. On ajoute 1 ml de triéthylamine comme catalyseur et 150 ml d'un solvant qui est l'acétate d'éthyle puis on chauffe le mélange homogène ainsi obtenu à 45-50 °C. On coule alors, en une heure, 41,5 g (0,494 mole) de dicétène en maintenant la température à 50 °C. On note une légère exothermicité notamment en début de coulée. En fin de coulée on laisse encore une heure à 50 °C, puis on laisse revenir le mélange réactionnel à température ambiante. On élimine l'excès de dicétène par évaporation sous pression réduite (0,7 Kpa) à 50-60 °C. On obtient alors une huile jaune trouble que l'on filtre pour obtenir 138 g d'une huile jaune, limpide et inodore.

Par acidimétrie au moyen de soude aqueuse 0,5 N en milieu eau/acétone on vérifie l'absence d'acidité forte (acide déhydroacétique) et on titre une acidité faible (de pKa environ 10); de 331 meq/100 g et représentant la fonction β-cétoester. Le rendement en fonction β-cétoester par rapport au nombre de fonction alcool engagé est de 97,6 %.

Le produit obtenu est représenté par la formule moyenne suivante :

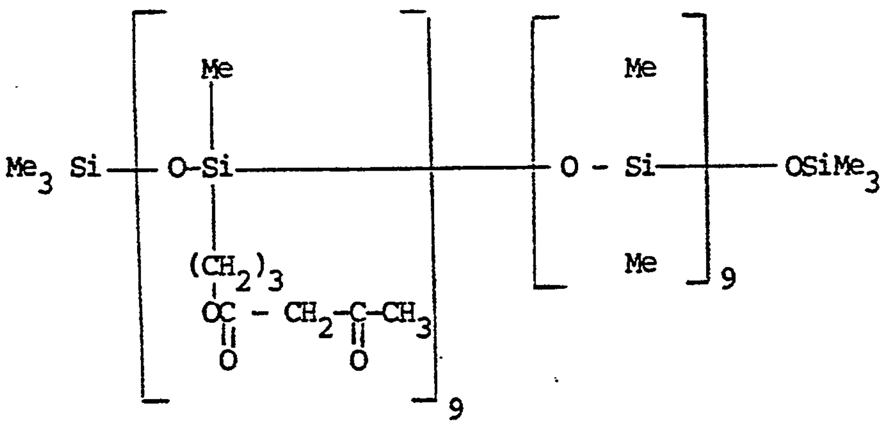

- EXEMPLES 2 A 5 :

En opérant comme à l'exemple 1 mais en modifiant la composition de l'huile gamma-hydroxypropylée initiale on prépare les produits suivants de formule moyenne :

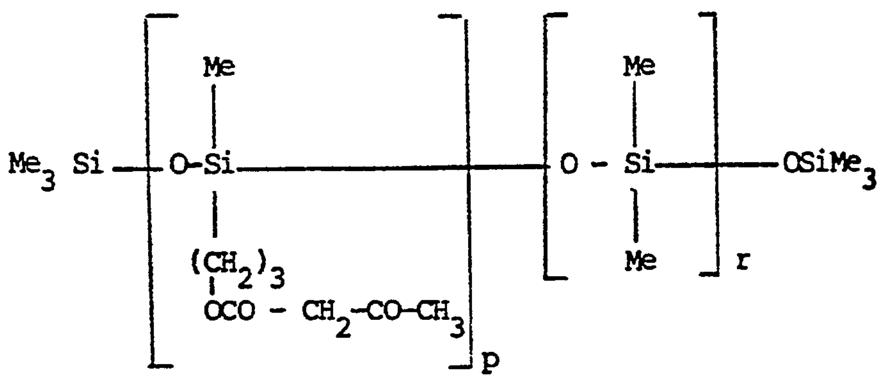

Les valeurs de p et r ainsi que le titre t en fonction β-cétoester exprimé en meq/100 g sont rassemblés dans le tableau I ci-après.

TABLEAU 1

| Ex | p | r | t |
|---|---|---|---|
| 2 | 4,5 | 11 | 230 |
| 3 | 12 | 17 | 298 |
| 4 | 12 | 45 | 197 |
| 5 | 12 | 6 | 362 |

- EXEMPLE 6 :

On reprend le mode opératoire de l'exemple 1, en partant de la même huile hydroxypropylée (100 g, 468 meq/100 g en fonction alcool), sauf que l'on coule une quantité moindre de dicétène (20 g, soit 0,238 mole).

On obtient une huile jaune, limpide, inodore de formule moyenne :

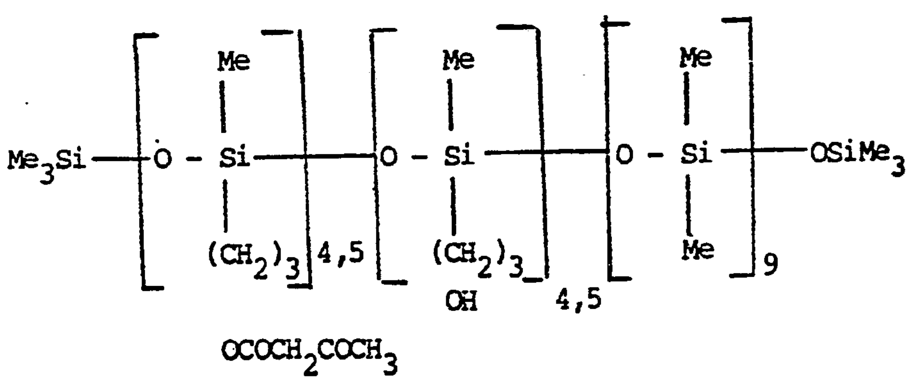

et présentant un titre en fonction acétoacétate de 188 meq/100 g.

- EXEMPLE 7 :

On part d'une huile gamma-hydroxypropylée de formule moyenne :

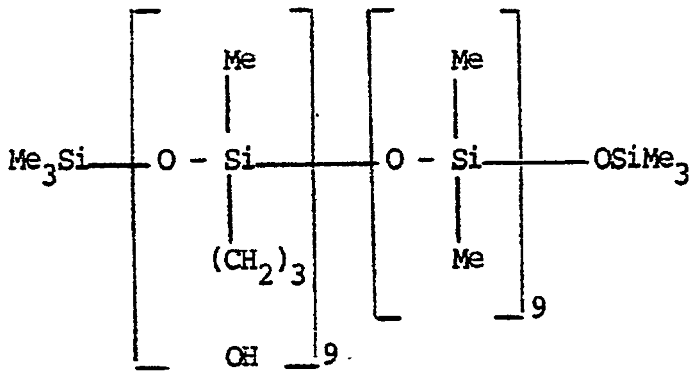

Sur cette huile on effectue une estérification partielle des fonctions alcool par du méthacrilate de méthyle en présence d'oxyde de dibutylétain.

On obtient une huile de formule :

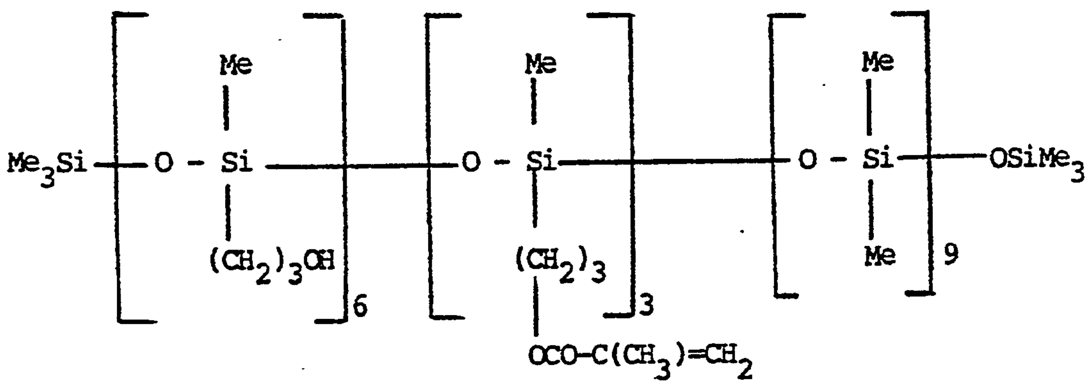

On fait réagir le dicétène en léger excès en opérant comme à l'exemple 1. On obtient après élimination de l'excès de dicétène une huile jaune, limpide et inodore de formule approchée :

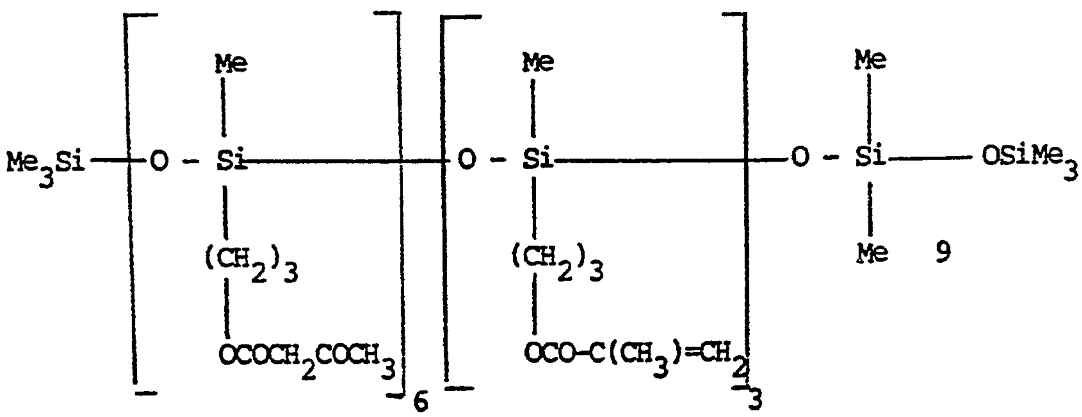

titrant 220 meq/100 g en fonction acétoacétate.

- <u>EXEMPLES COMPARATIFS 8 A 10 ET EXEMPLES 11 A 14</u> :

On prépare la composition homogène A de base suivante :

- 1 000 g de PVC en poudre caractérisé par un indice de viscosité de 80 selon la norme NF T 51013 obtenu par polymérisation en suspension et vendu sous la marque déposée LACQVYL SO 71 S',

- 80 g de renforcateur choc (copolymère butadiène-styrène-méthacrylate de méthyle),
- 2,5 g de stéarate de calcium,
- 2,5 g de stéarate de zinc,
- 40 g d'huile de soja époxydée.

On prélève six fractions de 112, 5 g chacune, de cette composition A (chaque fraction contient 100 g de PVC).

Une fraction servant de témoin est utilisée telle quelle sans ajouter de stabilisant (exemple comparatif 8).

A chacune de ces fractions on ajoute certaine quantité en grammes de l'une des huiles à fonction acétoacétate des exemples 1 et 2 selon les indications données dans le tableau ci-après (exemples 11 à 14). A titre comparatif, dans deux de ces fractions, l'huile à fonction acétoacétate est remplacée par un ester acétoacétique courant qui est l'acétoacétate d'octadécyle, dénommé ci-après AAO (exemples comparatifs 9 et 10).

On prépare à l'aide des différentes compositions obtenues, ainsi qu'avec la composition A non modifiée, des feuilles de 1 mm d'épaisseur par malaxage sur un mélangeur à deux cylindres pendant trois minutes à 180 °C. On découpe dans ces feuilles des échantillons rectangulaires de 1 x 2 cm environ.

On effectue le test de vieillissement thermique ser ces échantillons, en étuve ventilée à 180 °C, pendant des durées variables (t en minutes).

On détermine alors la coloration des échantillons par comparaison avec un disque LOVIBOND selon l'échelle GARDNER.

Les résultats obtenus sont regroupés dans le tableau 2 ci-après.

TABLEAU 2

| EX | Stabilisant et quantité en g pour 100 g de PVC | COLORATION GARDNER EN FONCTION DU TEMPS A 180 °C | | | | | | | | |
|---|---|---|---|---|---|---|---|---|---|---|
| | | t mn | 0 | 7 | 14 | 21 | 30 | 45 | 60 | 80 |
| 8 | néant | | 4 | 6 | 6 | 7 | 7 | 9 | 11 | noir |
| 9 | AAO 0,3 | | 0,5 | 2 | 2,5 | 3 | 4 | 8 | 11 | noir |
| 10 | AAO 0,6 | | 0,5 | 2 | 2 | 2,5 | 3,5 | 7 | 10 | noir |
| 11 | huile ex. 1 0,3 | | 0,5 | 1 | 2 | 2 | 3 | 7 | 11 | noir |
| 12 | huile ex. 1 0,6 | | 0,5 | 1 | 1,5 | 2 | 2,5 | 7 | 10 | noir |
| 13 | huile ex. 2 0,3 | | 0,5 | 2 | 2 | 3 | 4 | 7 | 10 | noir |
| 14 | huile ex. 2 0,6 | | 0,5 | 1 | 2 | 2 | 3,5 | 7 | 11 | noir |

Du tableau 2 il apparaît que les huiles à fonction acétoacétate de l'invention ont un meilleur pouvoir stabilisant du PVC que l'acétoacétate d'octadécyle.

**Revendications**

1. - Diorganopolysiloxane de formule :

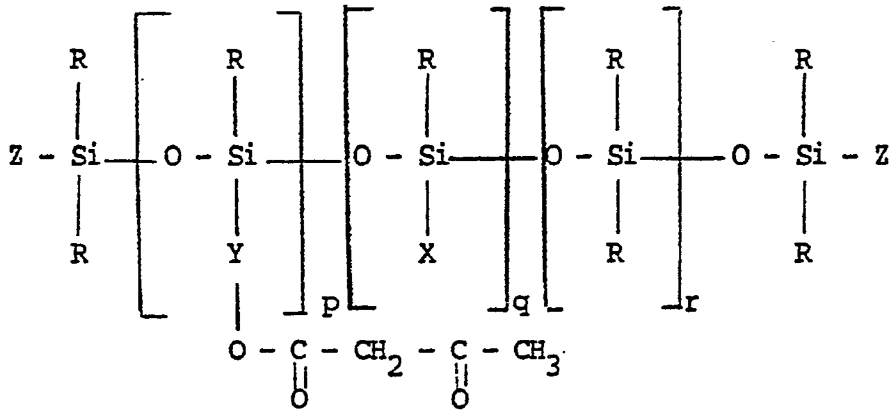

(1)

dans laquelle :
- les symboles R identiques ou différents sont choisis parmi les radicaux alkyle en $C_1$-$C_4$ inclusivement, trifluoro-3,3,3 propyle, vinyle et phényle, au moins 80 % en nombre des radicaux R étant des radicaux méthyle,
- les symboles Y, identiques ou différents, représentent un chaînon choisi parmi un chaînon alkylène linéaire ou ramifié en $C_1$-$C_{18}$ inclusivement, éventuellement prolongé par un chaînon polyéther choisi parmi le polyoxyde d'éthylène et le polyoxyde de propylène et leur mélange,
- les symboles X, identiques ou différents, représentent un radical choisi parmi Y-OH et Y-OCOR', Y ayant la signification ci-dessus et R' étant choisi parmi un radical alkyle ou alcényle linéaire ou ramifié en $C_1$-$C_{18}$ inclusivement,
- les symboles Z, identiques ou différents, sont choisis parmi un radical R ayant la signification ci-dessus, un radical

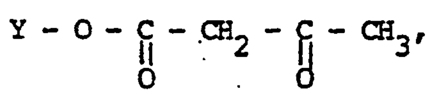

Y ayant la signification ci-dessus et OR', R' ayant la signification ci-dessus,
- p est un nombre entier compris entre 1 et 50 inclusivement, de préférence entre 1 et 16 inclusivement,
- q est un nombre entier compris entre 0 et 30 inclusivement, de préférence entre 0 et 8 inclusivement,
- r est un nombre entier compris entre 0 et 500 inclusivement, de préférence entre 2 et 50 inclusivement.

2. - Polymère selon la revendication 1, caractérisé en ce que R et Z sont des radicaux méthyle, Y est le chaînon $-(CH_2)_3-$ et, X est le radical $CH_2 = CHCOO-(CH_2)_3-$ ou $CH_2 = C(CH_3)COO(CH_2)_3-$.

3. - Procédé de préparation id'un polymère tel que défini à l'une quelconque des revendications précédentes, caractérisé en ce que l'on fait réagir une quantité adaptée de dicétène sur une huile hydroxylée de formule :

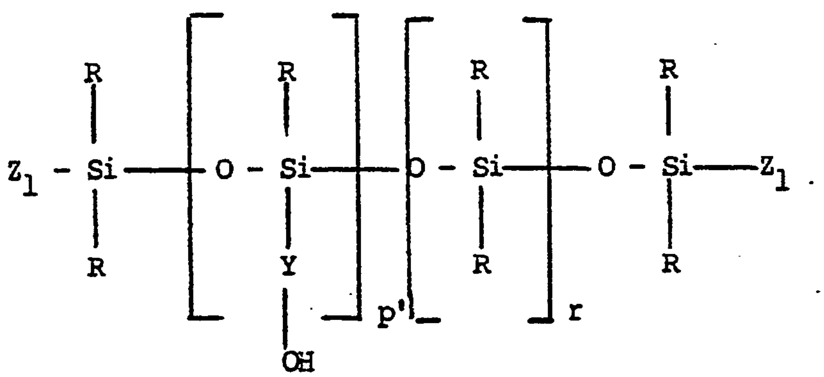

(2)

dans laquelle p' = p + q, R, Y et r ont la signification ci-dessus et $Z_1$ est R ou Y-OH éventuellement suivie dans le cas où q est différent de zéro d'une estérification des groupes hydroxyle résiduels.

5. - Procédé de stabilisation des polymères à base de chlorure de vinyle, caractérisé par l'emploi conjoint :

a) - d'une quantité efficace d'au moins un dérivé organique du zinc,

b) - d'une quantité efficace d'au moins un dérivé organique d'un métal du groupe II $_a$ de la classifica-

tion périodique des éléments ou d'au moins une hydrotalcite,
c) - d'une quantité efficace d'au moins un produit de formule (1) tel que défini à l'une quelconque des revendications 1 à 3.

6. - Procédé selon la revendication 5, caractérisé en ce qu'on utilise en poids par rapport au polymère à stabiliser :
- de 0,005 à 1 %, de préférence de 0,01 à 0,6 % de composé a),
- de 0,005 à 5 %, de préférence de 0,02 à 2 % de composé b),
- de 0,005 à 5 %, de préférence de 0,05 à 2 % de composé c).

7. - Composition pour la mise en oeuvre d'un procédé tel que défini à la revendication 5 ou 6, caractérisée en ce qu'elle comprend en poids :
- de 5 à 40 % de composé a),
- de 5 à 90 % de composé b),
- de 5 à 90 % de composé c).

8. - Composition de polymère à base de chlorure de vinyle stabilisée par le procédé de la revendication 5 ou 6.

9. - Objets conformés obtenus à partir des polymères stabilisés par le procédé de la revendication 5 ou 6.

## Claims

1. Diorganopolysiloxane of formula:

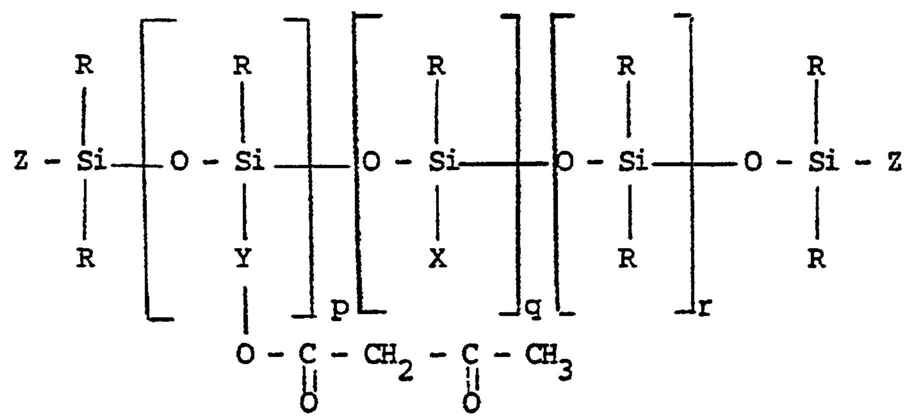

(1)

in which:
– the symbols R, which are identical or different, are chosen from $C_1$–$C_4$ (inclusive) alkyl, 3, 3, 3-trifluoropropyl, vinyl and phenyl radicals, at least 80% of the number of the radicals R being methyl radicals,
– the symbols Y, which are identical or different, denote a chain member chosen from a $C_1$–$C_{18}$ (inclusive) linear or branched alkylene chain member, optionally extended by a polyether chain member chosen from polyethylene oxide and polypropylene oxide and a mixture thereof,
– the symbols X, which are identical or different, denote a radical chosen from Y-OH and Y-OCOR', Y having the above meaning and R', being chosen from a $C_1$-$C_{18}$ (inclusive) linear or branched alkyl or alkenyl radical,
– the symbols Z, which are identical or different, are chosen from a radical R having the above meaning, a radical

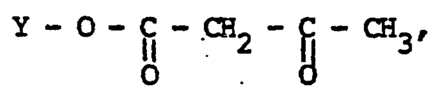

Y having the above meaning and OR' and R', having the above meaning,
– p is an integer between 1 and 50 (inclusive), preferably between 1 and 16 (inclusive),
– q is an integer between 0 and 30 (inclusive), preferably between 0 and 8 (inclusive),
– r is an integer between 0 and 500 (inclusive), preferably between 2 and 50 (inclusive).

2. Polymer according to Claim 1, characterized in that R and Z are methyl radicals, Y is the $-(CH_2)_3-$ chain member and X is the radical $CH_2=CHCOO-(CH_2)_3-$ or $CH_2=C(CH_3)COO(CH_2)_3-$.

3. Process for the preparation of a polymer such as defined in either of the preceding claims, characterized in that an adjusted quantity of diketene is reacted with a hydroxylated oil of formula:

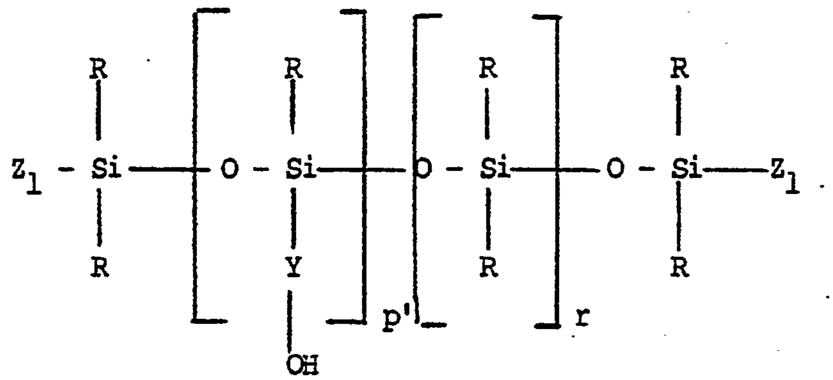

(2)

in which p'= p + q, R, Y and r have the above meaning and $Z_1$ is R or Y-OH, optionally followed by an esterification of the residual hydroxyl groups in the case where q is other than zero.

5. Process for the stabilization of polymers based on vinyl chloride, characterized by the joint use:
a) – of an effective quantity of at least one organic zinc derivative,
b) – of an effective quantity of at least one organic derivative of a metal of group II of the Periodic Classification of the elements or of at least one hydrotalcite, and
c) – of an effective qnantity of at least one product of formula (1) such as defined in any one of Claims 1 to 3.

6. Process according to Claim 5, characterized in that:
– from 0.005 to 1%, preferably from 0.01 to 0.6% of compound a),
– from 0.005 to 5%, preferably from 0.02 to 2% of compound b), and
– from 0.005 to 5%, preferably from 0.05 to 2% of compound c)
by weight, are employed relative to the polymer to be stabilized.

7. Composition for making use of a process such as defined in Claim 5 or 6, characterized in that it comprises, by weight:
– from 5 to 40% of compound a),
– from 5 to 90% of compound b), and
– from 5 to 90% of compound c).

8. Vinyl chloride-based polymer composition stabilized by the process of Claim 5 or 6.

9. Shaped objects obtained from polymers stabilized by the process of Claim 5 or 6.

**Patentansprüche**

1. Diorganopolysiloxane der Formel

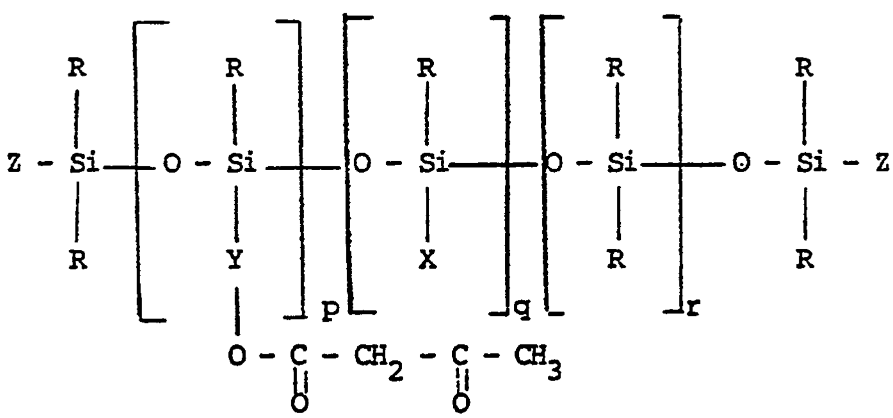

(1)

worin
– die Symbole R, die gleich oder verschieden sind, unter den $C_1$–$C_4$ (einschließlich) -Alkylresten, dem 3, 3, 3-Trifluorpropyl-, Vinyl- und Phenylrest ausgewählt sind, wobei zumindest 80% der Anzahl der Reste R Methylreste sind,
– die Symbole Y, die gleich oder verschieden sind, eine Kette, ausgewählt unter einer linearen oder verzweigten $C_1$–$C_{18}$ (einschließlich) - Alkylenkette, die gegebenenfalls verlängert ist durch eine Polyetherkette, ausgewählt unter Polyethylenoxid und Polypropylenoxid und deren Mischungen, wiedergeben,
– die Symbole X, die gleich oder verschieden sind, einen Rest, ausgewählt unter Y-OH und Y-OCOR′, wobei Y die vorstehende Bedeutung besitzt, und R, ausgewählt ist unter einem linearen oder verzweigten $C_1$–$C_{18}$(einschließlich) Alkyl- oder Alkenylrest, bedeuten, die Symbole Z, die gleich oder verschieden sind, unter einem Rest R mit der vorstehenden Definition, einem Rest

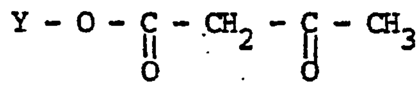

wobei Y die vorstehende Bedeutung besitzt, und OR′, wobei R′, die vorstehende Bedeutung besitzt, ausgewählt sind,
– p eine ganze Zahl zwischen 1 und 50 einschließlich, vorzugsweise zwischen 1 und 16 einschließlich, wiedergibt,
– q eine ganze Zahl zwischen 0 und 30 einschließlich, vorzugsweise zwischen 0 und 8 einschließlich, wiedergibt,
– r eine ganze Zahl zwischen 0 und 500 einschließlich, vorzugsweise zwischen 2 und 50 einschließlich, wiedergibt.

2. Polymeres gemäß Anspruch 1, dadurch gekennzeichnet, daß R und Z Methylreste sind, Y die Kette -$(CH_2)_3$ wiedergibt, und X den Rest $CH_2 = CHCOO\text{-}(CH_2)_3\text{-}$ oder $CH_2 = C(CH_3)COO(CH_2)_3$ wiedergibt.

3. Verfahren zur Herstellung eines Polymeren gemäß einem der vorhergehenden Ansprüche, dadurch gekennzeichnet, daß man eine geeignete Menge Diketen mit einem hydroxylierten Öl der Formel

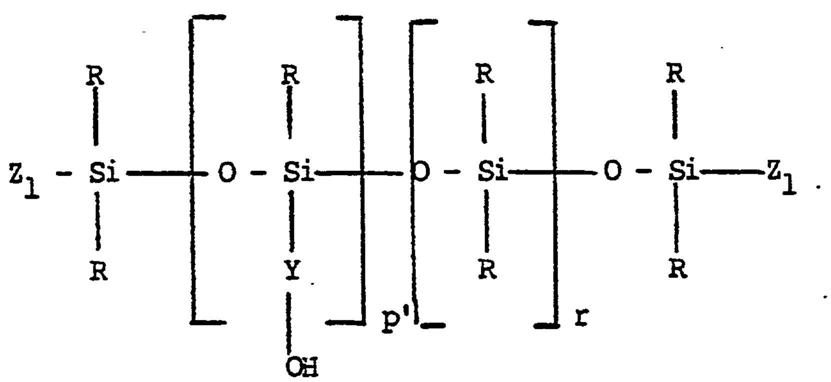

(2)

umsetzt, worin p′ = p + q, R, Y und r die vorstehende Bedeutung besitzen und Z1 die Bedeutung von R besitzt oder Y-OH ist, woran sich gegebenenfalls, wenn q von 0 verschieden ist, eine Veresterung der verbliebenen Hydroxylgruppen anschließt.

5. Verfahren zur Stabilisierung von Polymeren auf Basis von Vinylchlorid, gekennzeichnet durch die gemeinsame Verwendung von:
a) einer wirksamen Menge zumindest eines organischen Zinkderivats
b) einer wirksamen Menge zumindest eines organischen Derivats eines Metalls der Gruppe IIa des Periodensystems der Elemente oder zumindest eines Hydrotalcits
c) einer wirksamen Menge zumindest eines Produkts der Formel (I) gemäß einem der Ansprüche 1 bis 3.

6. Verfahren gemäß Anspruch 5, dadurch gekennzeichnet, daß man, ausgedrückt durch Gewicht, bezogen auf das zu stabilisierende Polymere verwendet:
– 0, 005 bis 1%, vorzugsweise 0, 01 bis 0, 6% der Verbindung a)
– 0, 005 bis 5%, vorzugsweise 0, 02 bis 2% der Verbindung b)
– 0, 005 bis 5%, vorzugsweise 0, 05 bis 2% der Verbindung c).

7. Zusammensetzung für die Verwendung bei einem Verfahren gemäß Anspruch 5 oder 6, dadurch gekennzeichnet, daß sie auf das Gewicht bezogen enthält:
– 5 bis 40% Verbindung a)
– 5 bis 90% Verbindung b)
– 5 bis 90% Verbindung c).

8. Zusammensetzung eines Polymeren auf Vinylchloridbasis, das gemäß dem Verfahren nach Anspruch 5 oder 6 stabilisiert ist.

9. Formgegenstände, erhalten aus den gemäß dem Verfahren nach Anspruch 5 oder 6 stabilisierten Polymeren.